# EUROPEAN PATENT APPLICATION

(11) **EP 2 996 109 A1**
(43) Date of publication of application: **16.03.2016**
(21) Application number: 15185101.1
(22) Date of filing: 14.09.2015
(51) Int. Cl.: G09G 5/02, G09G 5/00, G06F 3/0488

(54) **METHOD AND APPARATUS FOR PROCESSING DISPLAY DATA IN ELECTRONIC DEVICE**

(30) Priority: 12.09.2014 KR 20140121164
(71) Applicant: Samsung Electronics Co., Ltd., Gyeonggi-do 16677 (KR)
(72) Inventor: Kim, Kwangyoung, 16677 Suwon-si (KR); Bae, Jongkon, 16677 Suwon-si (KR); Lee, Yongman, 16677 Suwon-si (KR)
(74) Representative: Nederlandsch Octrooibureau

(57) **Abstract**

A display data controlling method of an electronic device is provided. The display data controlling method includes transferring a first image of a first color bit format from a processor of the electronic device to a display unit of the electronic device or being functionally connected with the electronic device; detecting, by the processor, a screen transition; converting, by the processor based on the detection, a color bit format of second image corresponding to the screen transition into a second color bit format; and transferring the second image which is converted into the second color bit format from the processor to the display unit through an interface.

## Description

### TECHNICAL Field

The present disclosure relates to a method and apparatus for processing display data of an electronic device.

### BACKGROUND

An electronic device may display various pieces of information (for example, multimedia data, text data, or the like) to a user. A display screen may be made of pixels. A pixel is the smallest unit, and pixels are gathered to display graphic elements, such as a line or a side.

The above information is presented as background information only to assist with an understanding of the present disclosure. No determination has been made, and no assertion is made, as to whether any of the above might be applicable as prior art with regard to the present disclosure.

### SUMMARY

According to the technologies of the related art, in order to express a color in a single pixel on a display that is functionally connected with an electronic device, the number of representable colors may be determined based on the amount of allocation of data. For example, the electronic device may represent many colors (for example, about 65,000 colors in the red, green, blue 565 (RGB565) (16 bits) format or about 16,000,000 colors in the RGB888 (24 bits) format) in a screen as the size of data allocated to a single pixel increases so that a higher quality image may be displayed through a display. However, as the size of data allocated to a single pixel increases, the amount of data that the processor needs to process increases, and thus, an electronic device may struggle and experience problems, such as an increase in data processing time, an increase in the amount of current consumed, extension of bandwidth of an interface for transferring data, and the like.

Aspects of the present disclosure are to address at least the above-mentioned problems and/or disadvantages and to provide at least the advantages described below. Accordingly, an aspect of the present disclosure is to provide a method and apparatus for processing display data of an electronic device, which adjusts the amount of display data processed in a processor in response to a screen transition event and executes processing and transfers the display data to a display.

In accordance with an aspect of the present disclosure, a method of processing display data of an electronic device is provided. The method includes transferring a first image of a first color bit format from a processor of the electronic device to a display unit of the electronic device or being functionally connected with the electronic device; detecting, by the processor, a screen transition; converting, by the processor based on the detection, a color bit format of second image corresponding to the screen transition into a second color bit format; and transferring the second image which is converted into the second color bit format from the processor to the display unit through an interface.

In accordance with another aspect of the present disclosure, an electronic device is provided. The electronic device includes a display configured to display image data and a processor connected with the display through an interface and that is configured to transfer image data of a first color bit format to the display, detect a screen transition of the image data of the first color bit format, change the image data associated with the screen transition into a second color bit format, and transfer the changed image data to the display through the interface.

In accordance with another aspect of the present disclosure, a method of processing display data of an electronic device is provided. The method includes providing display information in a first data format, through a display that is functionally connected with the electronic device, and changing the display information into a second data format based at least in part on a detected change of the display information.

In accordance with another aspect of the present disclosure, an electronic device is provided. The electronic device includes a display and a processor that is configured to provide display information in a first data format through the display, and to change the display information into a second data format, based at least in part on a detected change of the display information.

A method and apparatus for processing display data of an electronic device, according to various embodiments of the present disclosure, processes display data by reducing the size of the display data at the level of the processor, and expresses the display data in a high-bit color screen at the level of the display. Therefore, the electronic device may reduce the amount of current consumed, and may also reduce the amount of memory used, and the bandwidth of an interface between the processor and the display.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a network environment including an electronic device according to an embodiment of the present disclosure;
FIG. 2 is a block diagram of a data format controlling module of an electronic device according to an embodiment of the present disclosure;
FIG. 3 is a block diagram of a processor of an electronic device according to an embodiment of the present disclosure;
FIG. 4 illustrates a method of processing display data between a processor and a display processor according to an embodiment of the present disclosure;
FIG. 5 illustrates a method of processing display data in a processor of an electronic device according to an embodiment of the present disclosure;
FIG. 6 illustrates a method of processing display data in a display processor of an electronic device according to an embodiment of the present disclosure; and
FIG. 7 is a block diagram of an electronic device according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

As used herein, the singular forms "a", "an", and "the" include plural referents, including "at least one", unless the context clearly dictates otherwise. Thus, for example, reference to "a component surface" includes reference to one or more of such surfaces.

"Or" means "and/or". As used herein, the term "and/or" includes any and all combinations of one or more of the associated listed items. It will be further understood that the terms "comprises" and/or "comprising", or "includes" and/or "including" when used in this specification, specify the presence of stated features, regions, integers, operations, elements, and/or components, but do not preclude the presence or addition of one or more other features, regions, integers, operations, elements, components, and/or groups thereof.

It will be understood that, although the terms "first", "second", "third", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element", "component", "region", "layer" or "section" discussed below could be termed a second element, component, region, layer or section without departing from the teachings herein.

In the present disclosure, an electronic device may be a device that involves a communication function. For example, an electronic device may be a smart phone, a tablet personal computer (PC), a mobile phone, a video phone, an e-book reader, a desktop PC, a laptop PC, a netbook computer, a personal digital assistant (PDA), a portable multimedia player (PMP), a Moving Picture Experts Group phase 1 or phase 2 (MPEG-1 or MPEG-2) audio layer 3 (MP3) player, a portable medical device, a digital camera, or a wearable device (e.g., a head-mounted device (HMD) such as electronic glasses, electronic clothes, an electronic bracelet, an electronic necklace, an electronic accessory, or a smart watch).

According to an embodiment of the present disclosure, an electronic device may be a smart home appliance that involves a communication function. For example, an electronic device may be a television (TV), a digital versatile disc (DVD) player, audio equipment, a refrigerator, an air conditioner, a vacuum cleaner, an oven, a microwave, a washing machine, an air cleaner, a set-top box, a TV box (e.g., Samsung HomeSync™, Apple TV™, Google TV™, etc.), a game console, an electronic dictionary, an electronic key, a camcorder, or an electronic picture frame.

According to various embodiments of the present disclosure, an electronic device may be a medical device (e.g., magnetic resonance angiography (MRA), magnetic resonance imaging (MRI), computed tomography (CT), ultrasonography, etc.), a navigation device, a global positioning system (GPS) receiver, an event data recorder (EDR), a flight data recorder (FDR), a car infotainment device, electronic equipment for ship (e.g., a marine navigation system, a gyrocompass, etc.), avionics, security equipment, or car head unit, vehicle for head unit, an industrial, or home robot, automatic teller's machine (ATM), or point of sales (POS).

According to various embodiments of the present disclosure, an electronic device may be furniture or part of a building or construction having a communication function, an electronic board, an electronic signature receiving device, a projector, or various measuring instruments (e.g., a water meter, an electric meter, a gas meter, a wave meter, etc.). An electronic device disclosed herein may be one of the above-mentioned devices or any combination thereof. As well understood by those skilled in the art, the above-mentioned electronic devices are not to be considered as a limitation of this disclosure.

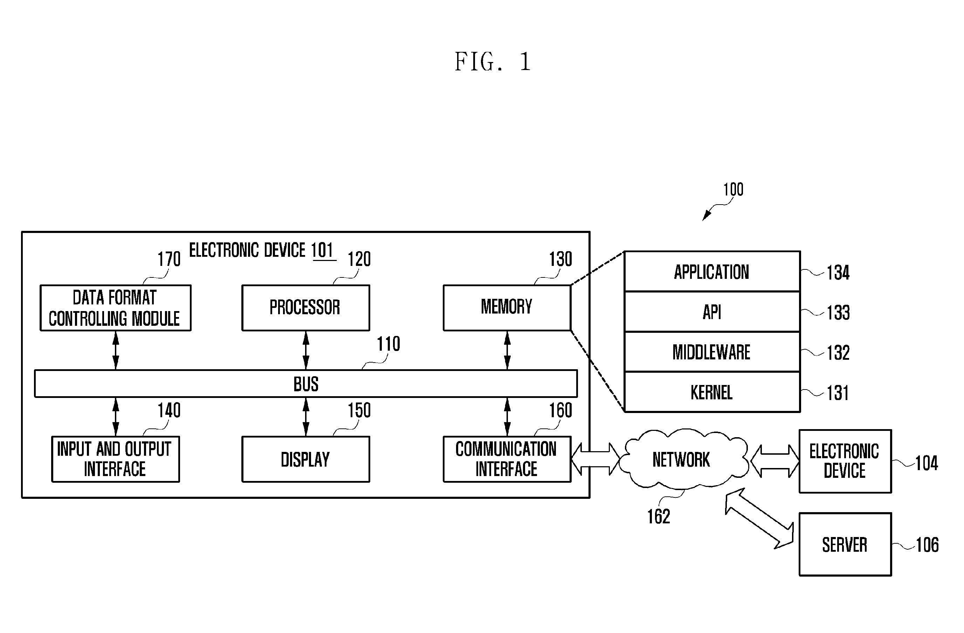

FIG. 1 is a block diagram illustrating a network environment 100 including therein an electronic device 101 according to an embodiment of the present disclosure.

Referring to FIG. 1, the electronic device 101 may include, but is not limited to, a bus 110, a processor 120, a memory 130, an input/output interface 140, a display 150, a communication interface 160, and an application control module 170.

The bus 110 may be a circuit designed for connecting the above-discussed elements and communicating data (e.g., a control message) between such elements.

The processor 120 may receive commands from the other elements (e.g., the memory 130, the input/output interface 140, the display 150, the communication interface 160, or the application control module 170, etc.) through the bus 110, interpret the received commands, and perform the arithmetic or data processing based on the interpreted commands.

The memory 130 may store therein commands or data received from or created at the processor 120 or other elements (e.g., the input/output interface 140, the display 150, the communication interface 160, or the application control module 170, etc.). The memory 130 may include programming modules such as a kernel 131, a middleware 132, an application programming interface (API) 133, and an application 134. Each of the programming modules may be composed of software, firmware, hardware, and any combination thereof.

The kernel 131 may control or manage system resources (e.g., the bus 110, the processor 120, or the memory 130, etc.) used for performing operations or functions of the other programming modules, e.g., the middleware 132, the API 133, or the application 134. Additionally, the kernel 131 may offer an interface that allows the middleware 132, the API 133 or the application 134 to access, control or manage individual elements of the electronic device 101.

The middleware 132 may perform intermediation by which the API 133 or the application 134 communicates with the kernel 131 to transmit or receive data. Additionally, in connection with task requests received from the applications 134, the middleware 132 may perform a control (e.g., scheduling or load balancing) for the task request by using technique such as assigning the priority for using a system resource of the electronic device 101 (e.g., the bus 110, the processor 120, or the memory 130, etc.) to at least one of the applications 134.

The API 133 which is an interface for allowing the application 134 to control a function provided by the kernel 131 or the middleware 132 may include, for example, at least one interface or function (e.g., a command) for a file control, a window control, an image processing, a text control, and the like.

According to an embodiment of the present disclosure, the application 134 may include a short message service (SMS)/multimedia message service (MMS) application, an email application, a calendar application, an alarm application, a health care application (e.g., an application for measuring quantity of motion or blood sugar), an environment information application (e.g., an application for offering information about atmospheric pressure, humidity, or temperature, etc.), and the like. Additionally or alternatively, the application 134 may be an application associated with an exchange of information between the electronic device 101 and any external electronic device (e.g., an external electronic device 104). This type of application may include a notification relay application for delivering specific information to an external electronic device, or a device management application for managing an external electronic device.

For example, the notification relay application may include a function to deliver notification information created at any other application of the electronic device 101 (e.g., the SMS/MMS application, the email application, the health care application, or the environment information application, etc.) to an external electronic device (e.g., the electronic device 104). Additionally or alternatively, the notification relay application may receive notification information from an external electronic device (e.g., the electronic device 104) and offer the notification information to a user. The device management application may manage (e.g., install, remove or update) a certain function (a turn-on/turn-off of an external electronic device (or some components thereof), or an adjustment of brightness (or resolution) of a display) of any external electronic device (e.g., the electronic device 104) communicating with the electronic device 101, a certain application operating at such an external electronic device, or a certain service (e.g., a call service or a message service) offered by such an external electronic device.

According to an embodiment of the present disclosure, the application 134 may include a specific application specified depending on attributes (e.g., a type) of an external electronic device (e.g., the electronic device 104). For example, when the external electronic device is an MP3 player, the application 134 may include a specific application associated with a play of music. Similarly, when the external electronic device is a portable medical device, the application 134 may include a specific application associated with a health care. In an embodiment of the present disclosure, the application 134 may include at least one of an application assigned to the electronic device 101 or an application received from an external electronic device (e.g., the server 106 or the electronic device 104).

The input/output interface 140 may deliver commands or data, entered by a user through an input/output unit (e.g., a sensor, a keyboard, or a touch screen), to the processor 120, the memory 130, the communication interface 160, or the application control module 170 via the bus 110. For example, the input/output interface 140 may offer data about a user's touch, entered through the touch screen, to the processor 120. Through the input/output unit (e.g., a speaker or a display), the input/output interface 140 may output commands or data, received from the processor 120, the memory 130, the communication interface 160, or the application control module 170 via the bus 110. For example, the input/output interface 140 may output voice data, processed through the processor 120, to a user through the speaker.

The display 150 may display thereon various kinds of information (e.g., multimedia data, text data, etc.) to a user.

The communication interface 160 may perform a communication between the electronic device 101 and any external electronic device (e.g., the electronic device 104 or the server 106). For example, the communication interface 160 may communicate with an external device by being connected with a network 162 through a wired or wireless communication. A wireless communication may include, but not limited to, at least one of Wi-Fi, Bluetooth (BT), near field communication (NFC), GPS, or a cellular communication (e.g., long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), etc.). A wired communication may include, but not limited to, at least one of universal serial bus (USB), high definition multimedia interface (HDMI), recommended standard 232 (RS-232), or plain old telephone service (POTS).

According to an embodiment of the present disclosure, the network 162 may be a communication network, which may include at least one of a computer network, an internet, an internet of things, or a telephone network. According to an embodiment of the present disclosure, a protocol (e.g., transport layer protocol, data link layer protocol, or physical layer protocol) for a communication between the electronic device 101 and an external device may be supported by at least one of the application 134, the API 133, the middleware 132, the kernel 131, or the communication interface 160.

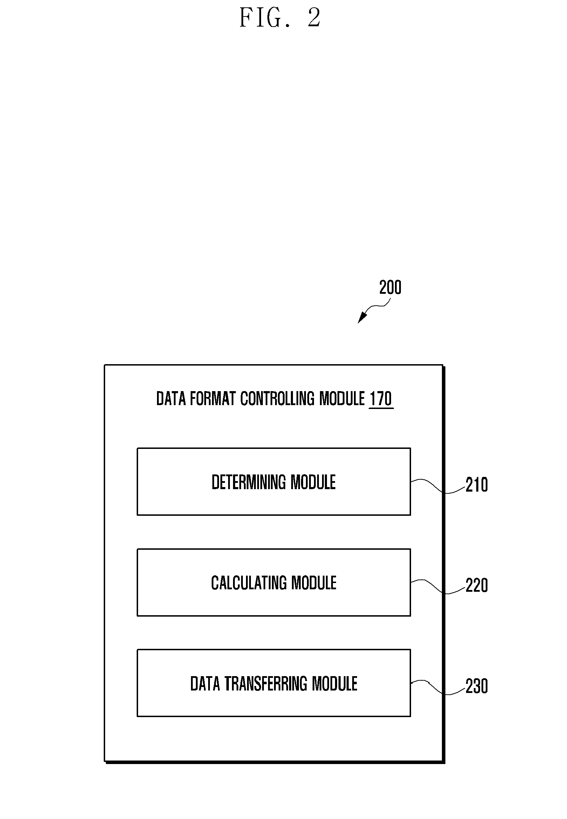

The application control module 170 may process at least part of information obtained from the other elements (e.g., the processor 120, the memory 130, the input/output interface 140, or the communication interface 160, etc.) and then offer the information to a user in various ways. For example, the application control module 170 may recognize information about access components equipped in the electronic device 101, store such information in the memory 130, and execute the application 134 on the basis of such information. A further description about the application control module 170 will be given hereinafter through FIG. 2.

FIG. 2 is a block diagram of a data format controlling module of an electronic device (for example, the electronic device 101) according to an embodiment of the present disclosure.

Referring to FIG. 2, the data format controlling module 170 may include a determining module 210, a calculating module 220, and a data transferring module 230. The data format controlling module 170 may operate in the processor (the processor 120 of FIG. 1).

The determining module 210 may detect a screen transition event. The screen transition event may be an event in which display data (for example, image data) is successively changed or updated in response to a user input or an external updating event. The user input may include at least one of a touch input, a hovering input, a gesture input, a sight line input, and a brainwave input. The determining module 210 may determine the data format of display data provided to the display. The determining module 210 may execute a control to process the display data in a data format corresponding to the capability of the display. The determining module 210 may execute a control to process the display data by changing the data format (for example, a frame rate, a color depth, a color space, etc.) when a transition speed of the display data in response to the screen transition event is included in a specified range or exceeds a specified reference.

For example, the determining module 210 may decide to maintain the data format corresponding to the capacity of the display when the speed of the transition of the screen does not exceed the specified condition, or may decide to change the data format when the screen transition speed exceeds the defined condition. In this instance, the determining module 210 may decide to change the data format to a data format having a smaller number of representation bits than the data format corresponding to the capacity of the display.

The determining module 210 may change at least one of the number of bits of the display data, a frame rate, a color space, and a color depth. The color depth may indicate the length of data or the number of pieces of data that are allocated to represent a color per pixel. The color space may be at least one of red, green, blue (RGB), YUV, and Ycbcr. The determining module 210 may transfer the changed information provided in the data format to the calculating module 220. For example, when the screen transition speed exceeds a defined threshold value in an electronic device equipped with a display with the capability of RGB888 (24 bits), the determining module 220 may change, into RGB565 (16 bits), the data format of the display data associated with the screen transition.

The calculating module 220 may calculate the display data for configuring a screen in the data format determined by the determining module 210, and may transfer the calculated display data to the information transferring module 230. For example, the calculation module 220 may calculate the display data in the RGB888 (24 bits) data format providing about 16,000,000 colors, based on the determination of the determining module 210, and execute rendering. The calculating module 220 may calculate the display data in the RGB565 (16 bits) data format providing about 65,000 colors, and execute rendering.

The data transferring module 230 may transfer, to the display, the display data calculated in the calculation module 220.

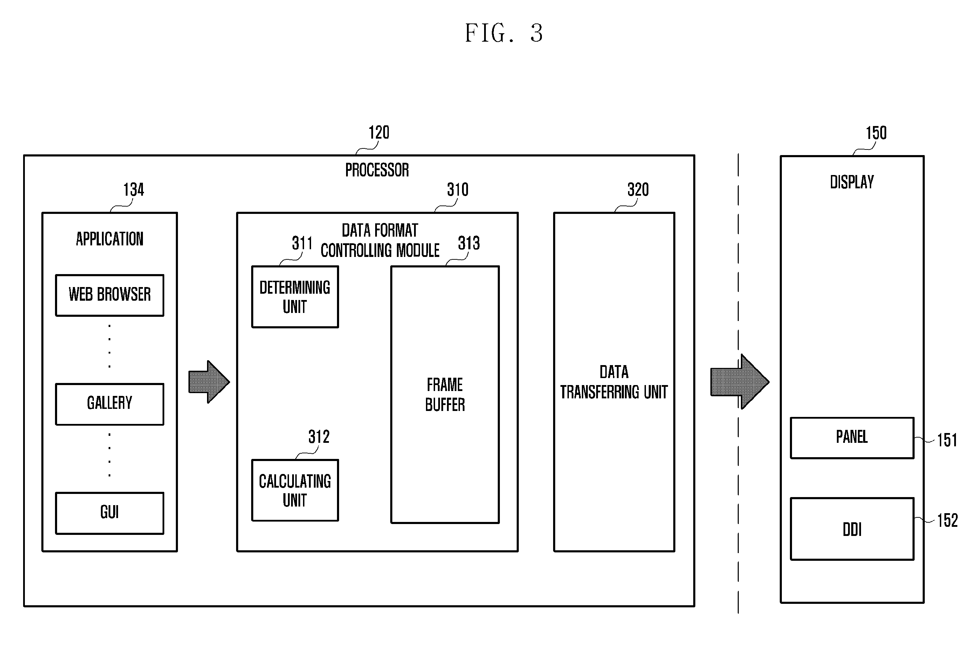

FIG. 3 is a block diagram of an electronic device (for example, the electronic device 101) according to an embodiment of the present disclosure.

Referring to FIG. 3, the processor 120, according to an embodiment of the present disclosure, may detect a screen transition event based on an application 134 (e.g., a web browsing app, a message app, an alarm app, a timer app, a gallery app, etc.) through a user input or a screen transition event. The processor 120 may detect a screen transition event from other components of the electronic device (e.g., an input/output interface, a communication interface, etc.). For example, the processor 120 may detect a touch-based screen movement (e.g., flicking or dragging) event, a screen enlarging or reducing event, a time count changing event, and the like.

The processor 120 may include a data format controlling module 310 and a data transferring unit 320. The data format controlling module 310 may include a determining unit 311 that determines a data format of display data to be displayed on a display, and a calculating unit 312 that calculates display data for configuring a screen.

The determining unit 311 may determine the configuration of a screen to be displayed on the display, and may determine the data format of the display data based on the configuration of the screen. The determining module 311 may determine to change at least one of the number of bits of the display data, a frame rate, a color space, and a color depth.

The determining unit 311 may determine a screen transition speed (for example, a speed of a change of a frame) corresponding to a screen transition event, and may determine a data format of display data associated with the screen transition speed. For example, the determining unit 311 may determine to change the data format (e.g., to change a first color bit format into a second color bit format) when the screen transition speed satisfies a designated condition, and may determine to maintain the data format (e.g., to maintain the first color bit format) corresponding to the capacity of the display when the screen transition speed does not satisfy the designated condition. The determining unit 311 may request the calculating unit 312 to calculate the display data in the determined data format.

The calculating unit 312 may calculate the display data to be displayed on the display in the data format determined in the determining unit 311. The calculating unit 312 may calculate the display data associated with the screen transition, based on the display data displayed on the display. When the determining unit 311 requests the calculation in a first data format, the calculating unit 312 may calculate the display data based on the first data format, and when the determining unit 311 requests the calculation in a second data format, the calculating unit 312 may calculate the display data based on the second data format.

The calculating unit 312 may store the display data calculated based on the configuration of the screen in a frame buffer 313. A single unit of the frame buffer 313 may correspond to a single pixel in 1:1 correspondence. The size of the frame buffer 313 may be understood with multiplication values of a horizontal resolution, a vertical resolution, and a color depth. For example, when a screen is represented in the data format with 24 bits on a display with 1920 × 1080 resolution, a memory of 1092 × 1080 × 24 = 49,766,400 bytes, a memory of about 47.46 megabytes may be required. When the number of bits is converted from 24 bits to 16 bits, a memory of 1092 × 1080 × 16 = 33,177,600 bytes, a memory of about 31.64 megabytes may be required. As described above, based on the number of bits of the data format, the size of the display data that configures a screen may change, and the size of a storage memory (for example, the frame buffer 313) of the display data may also change.

The data transferring unit 320 may transfer, to the display 150, the display data calculated in the calculating unit. The data transferring unit 320 may transfer, to the display 150, the display data through an interface (for example, a mobility industry processor interface (MIPI)). The electronic device may reduce the size of the display data transferred through an interface when the display data is processed based on a data format including a small number of bits (for example, RGB 565 or the like).

The display 150 may include a panel 151 for displaying data, and a display driver integrated circuit (IC) (DDI) 152 for processing data displayed in the panel 151.

The display 150 may output, to the panel 151, the display data transferred from the processor 120.

The DDI 152 may convert the display data and execute a control to display the display data in the panel 151 when the display data corresponding to the capacity of the display needs to be converted based on the data format of the display data transferred from the processor 120. For example, the DDI 152 may convert the data format of the display data by copying the most significant bit of the display data that is changed in the second data format as the least significant bit, or by adding a fixed value to the least significant bit of the display data.

The electronic device may reduce the size of a data area allocated to a memory and reduce an amount of the memory used, by processing the display data with a relatively smaller number of color bits when compared to the capacity of the display. The electronic device may reduce an amount of data to be transferred to the display through a bus (for example, the MIPI interface), as the size of the display data is reduced.

According to an embodiment of the present disclosure, an electronic device comprising: a display unit configured to display image; and a processor configured to: transfer a first image of a first color bit format to the display unit of the electronic device or being functionally connected with the electronic device, detect a screen transition, convert a color bit format of second image corresponding to the screen transition into a second color bit format, and transfer the second image which is converted into the second color bit format from the processor to the display unit through an interface.

According to an embodiment of the present disclosure, the display unit comprises at least one display processor, at least one display panel, and at least part of the interface.

According to an embodiment of the present disclosure, the processor is configured to transfer the first image in the first color bit format and the second image in the second color bit format to at least one display processor of the display unit through the interface.

According to an embodiment of the present disclosure, the display unit is further configured to receive the second image in the second color bit format from the processor, to convert the received second image into a third color bit format, and to display the second image in the third color bit format.

According to an embodiment of the present disclosure, wherein the third color bit format corresponds to a color depth of the display unit.

According to an embodiment of the present disclosure, wherein the third color bit format comprises the first color bit format.

According to an embodiment of the present disclosure, wherein the number of bits per a pixel of the first color bit format is greater than the number of bits per a pixel of the second color bit format.

According to an embodiment of the present disclosure, wherein a color space of the first color bit format is one of red, green, blue (RGB), YUV, and Ycbcr.

According to an embodiment of the present disclosure, the display unit is further configured to copy at least one bit from the most significant bit of the received second image in the second color bit format as least significant bit of the second image in the third color bit format, and to add a fixed value to the least significant bit of the second image in the third color bit format.

According to an embodiment of the present disclosure, the processor is configured to receive a user input, and to determine whether a speed of the screen transition according to the user input is in a specified range or exceeds a specified threshold.

According to an embodiment of the present disclosure, wherein the user input comprises at least one of a touch input, a hovering input, a gesture input, a sight line input, and a brainwave input.

According to an embodiment of the present disclosure, the processor is configured to convert the color bit format of the second image corresponding to the screen transition into the second color bit format if the speed of the screen transition according to the user input is in the specified range or exceeds the specified threshold.

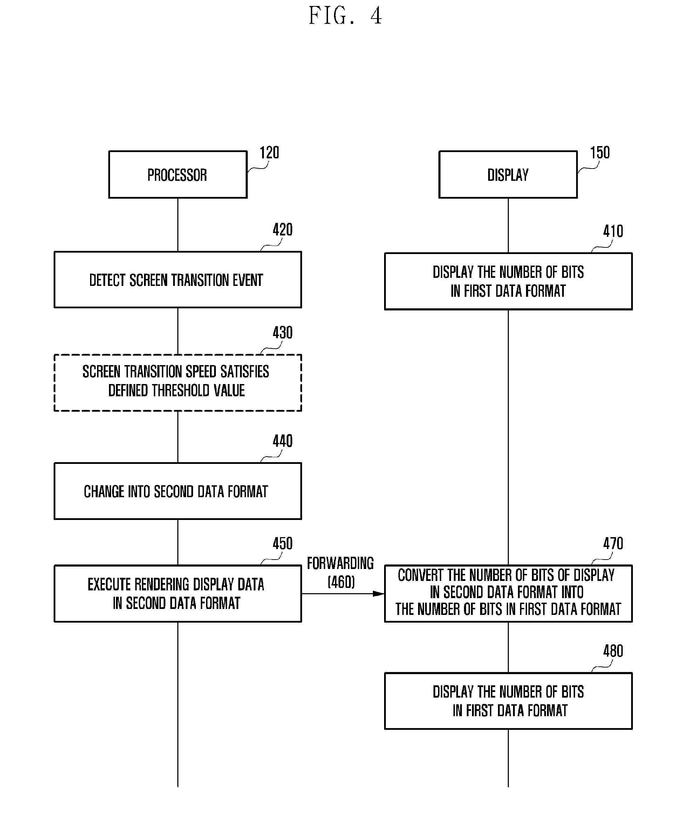

FIG. 4 illustrates a method of processing data between a processor and a display of an electronic device according to an embodiment of the present disclosure.

Referring to FIG. 4, the display 150 of the electronic device displays a screen with bits of a first data format, under the control of the processor 120, in operation 410. The first data format may be a format that represents colors with a high number of bits, such as RGB 888 (24 bits) or the like. For example, in the case of RGB 888, the number of bits allocated to each of red, green, and blue is 24 bits, and 16,777,216 (2²⁴) colors obtained by combining them may represent colors in the screen.

In operation 420, the processor 120 detects a screen transition event, based on an input signal received from at least some of the components of the electronic device (e.g., a touch panel, a sensor module, a timer, etc.) or an external electronic device (e.g., a server, an accessory device, etc.). For example, the processor 120 may obtain a screen transition event from an application (e.g., a web browsing app, a message app, an alarm app, a timer app, a picture app, etc.) event or a user input. The user input may include at least one of: a touch input, a hovering input, a gesture input, a sight line input, and a brainwave input. The processor 120 may determine the speed of transition of the screen based on the screen transition event, and may determine whether the screen transition speed satisfies a designated condition.

In operation 430, the processor 120 determines that the screen transition speed associated with the screen transition event satisfies the designated condition. For example, when the speed of the movement of the screen associated with the screen transition event is greater than a predetermined speed, it is determined that the speed satisfies the designated condition. In some embodiments, operation 430 may be omitted.

In operation 440, when the screen transition speed satisfies a defined threshold value, the processor 120 changes the data format of the display data associated with the screen transition into a second data format. The second data format may be a data format including a relatively smaller number of bits than the number of bits of the first data format. The determining module 120 may change at least one of the number of bits of the display data, a frame rate, a color space, and a color depth. For example, the second data format may be at least one of RGB 565 (16 bits), RGB 555 (15 bits), RGB 444 (12 bits), Ycbcr444 (16 bits), Ycbcr420 (12 bits), YUV422 (8 bits), and YUV420 (6 bits).

In operation 450, the processor 120 calculates screen transition data in the second data format, and executes rendering. In operation 460, the processor 120 may transfer the rendered display data to the display 150 (e.g., a DDI). In this instance, the processor may transfer the display data to the display 150 through an interface (for example, an MIPI).

According to an embodiment of the present disclosure, the processor 120 may process the screen transition data by applying a different number of bits to each frame. For example, when the number of changed frames of the screen is 4, the first frame may be rendered in a data format with 16 bits, the second frame may be rendered in a data format with 24 bits, the third frame may be rendered in a data format with 16 bits, and the fourth frame may be rendered in a data format with 24 bits.

In operation 470, the display 150 may convert the number of bits of the display data of the second data format transferred from the processor 120 into the number of bits of the first data format. The display may convert the number of bits of the display data into the number of bits of the first data format by copying the most significant bit of the display data of the second data format as the least significant bit, or by adding a fixed value to the least significant bit of the display data.

In operation 480, the display 150 may display a screen based on the display data with the bits corresponding to the number of bits of the first data format.

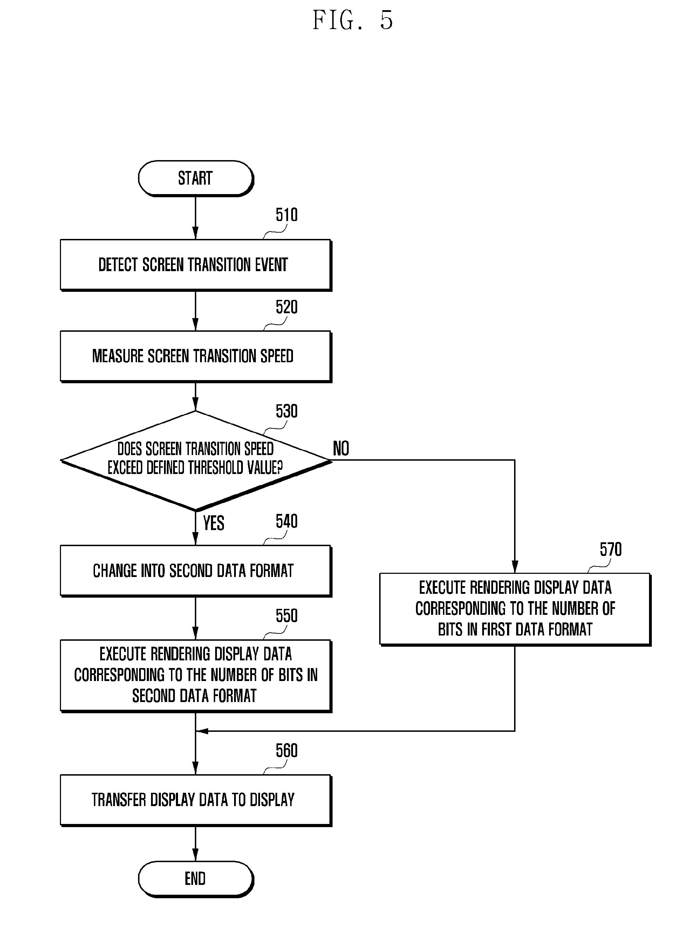

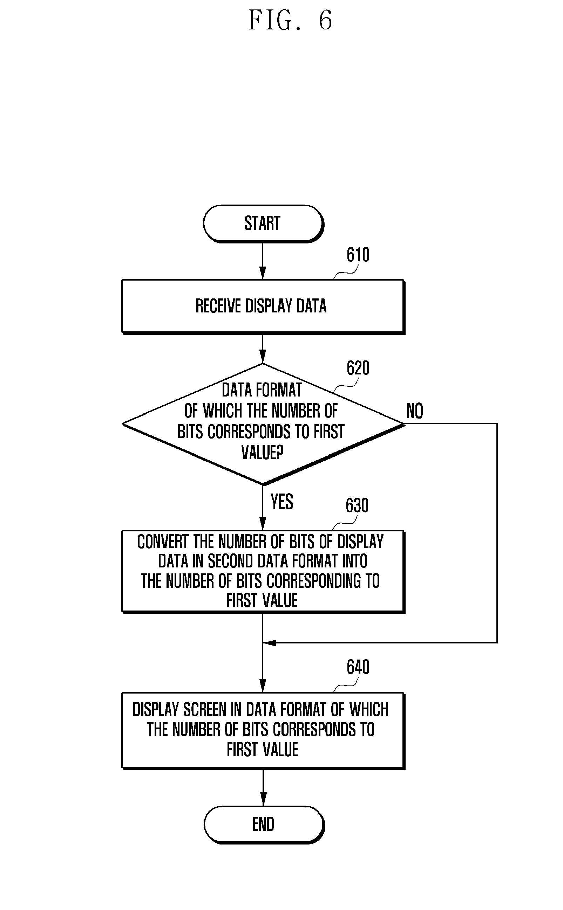

FIGS. 5 and 6 illustrate a method of processing display data of an electronic device according to various embodiments of the present disclosure. FIG. 5 is a flowchart of operations in a processor, and FIG. 6 is a flowchart of operations in a display.

Referring to FIG. 5, the processor of an electronic device detects a screen transition event in operation 510. The screen transition event may be an event that requests a successive changing or updating a screen. The screen transition event may be one of an alarm event, a reception event, a touch input event (e.g., a screen scrolling movement, a screen enlargement or reduction, etc.), a hovering input event, a gesture input event, a sight line input event, a brainwave input event, and a sensor input event. The display may display a screen, based on display data corresponding to the capacity of the display. The display may display the screen with the bits corresponding to the number of bits of a first data format. For example, when a display that has a 24-bit color depth capacity (e.g., RGB 888) is used, the electronic device may represent colors displayed in the screen based on the combinations of 24 bits.

In operation 520, the processor measures the screen transition speed associated with the screen transition event. For example, the processor may determine the speed and direction of the movement of the screen, based on a touch input signal that moves the screen in one direction. The processor may calculate the screen transition speed based on the speed and direction of the movement of the screen.

In operation 530, the processor determines whether the screen transition speed exceeds a defined threshold value. If the screen transition speed exceeds the defined threshold value, then in operation 540, the processor changes the data format into a second data format.

In operation 550, the processor renders the display data associated with the screen transition in the second data format. The second data format may be a data format including a relatively smaller number of bits than the number of bits of the first data format. For example, the processor may render the display data associated with the screen transition in a data format with 16 bits.

In operation 560, the processor may transfer the display data associated with the screen transition to the display through an interface (for example, an MIPI or the like) that connects the display and the processor.

When the screen transition speed does not exceed the defined threshold value in operation 530, then in operation 570, the processor renders the display data associated with the screen transition in the first data format.

The operation of the display that receives the display data (for example, display data) from the processor is as follows. The operation of the display may be executed through a processing module that drives the display, for example, a DDI.

Referring to FIG. 6, in operation 610, the display receives display data (for example, screen transition data) from the processor (e.g., an application processor (AP)) through an interface between the processor and the display. In operation 620, the display determines whether the display data is in a data format of which the number of bits corresponds to a first value. The data format of which the number of bits corresponds to the first value may be a data format that corresponds to the capacity of the display.

For example, when the electronic device is equipped with a display that is capable of representing a first data format, the display may analyze the number of bits of data transferred from the processor, and may determine whether the display data corresponds to the capacity of the display.

In operation 630, when the display data is transferred in a second data format as opposed to the data format of which the number of bits corresponds to the first value, the number of bits of the display data may be changed to have the number of bits corresponding to the first value. For example, when the display data is transferred in a data format with a low number of bits (e.g., a 16 bit-color depth format), the display may convert the display data to have a data format including a high number of bits (e.g., a 24-bit color depth format). For example, the display may execute a conversion by copying the most significant bit of the display data with the low number of bits as the least significant bit, or by adding a fixed value to the least significant bit of the display data. For example, the display may convert RGB 565[15:0] data represented by {R[4:0],G[7:0],B[4:0]} into RGB888[23:0] data represented by {R[4:0],R[4:2],G[5:0],G[5:4],B[4:0],B[4:2]} or RGB888[23:0] data represented by R[4:0], user_setting[2:0], G[5:0], user_setting[5:4], B[4:0], user_setting[4:2]}.

In various embodiments of the present disclosure, the display (for example, the DDI) may fill the number of bits of the display data using a data format conversion algorithm. The electronic device may provide an algorithm that adds the number of data bits based on user settings, or that adds a fixed value to the least significant bit. Alternatively, when converting the number of bits of the data format, the electronic device may be configured to copy the most significant bit of the display data as the least significant bit, or to enable a user to add a desired fixed value.

The display may select one of 000, 001, 010, 011, 100, 101, 110, and 111 based on user_setting[2:0], and fill the number of bits of the display data so that a fixed color is represented. The display may add the number of bits of data, based on a frame unit or a line unit, when changing the data format of the display data.

In operation 640, the display displays, on the screen, the display data in the data format of which the number of bits corresponds to the first value.

When the display receives the display data in the data format of which the number of bits corresponds to the first value in operation 630, the display proceeds with operation 640 so as to display the screen based on the display data. For example, when the display receives the display data in a data format with 24 bits from the processor (for example, an AP), the display may display a screen in which colors are represented based on 24 bits.

In the level of the processor, the electronic device, according to various embodiments of the present disclosure, processes display data by converting the display data into data with a low number of bits, so that the amount of memory used may be reduced. The bandwidth of an interface may be reduced, and a transmission rate of the display data may be increased. At the level of the display, the electronic device may provide a user with a high quality screen by changing the display data into display data including a high number of bits and displaying the same.

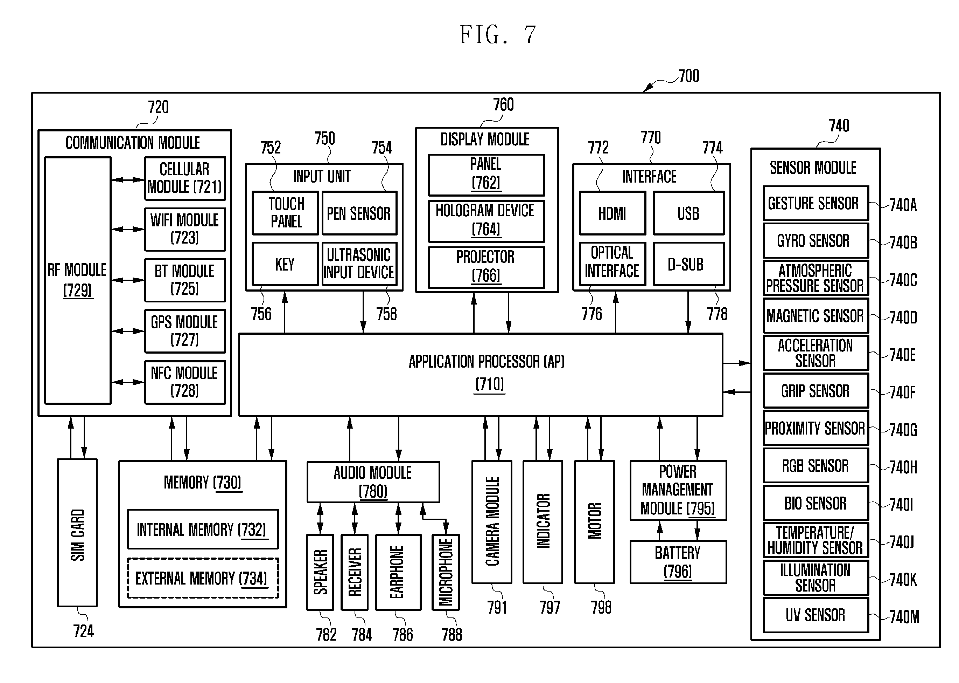

FIG. 7 is a block diagram illustrating an electronic device according to an embodiment of the present disclosure. The electronic device 700 may form, for example, the whole or part of the electronic device 101 shown in FIG. 1.

Referring to FIG. 7, the electronic device 700 may include at least one AP 710, a communication module 720, a subscriber identification module (SIM) card 724, a memory 730, a sensor module 740, an input unit 750, a display 760, an interface 770, an audio module 780, a camera module 791, a power management module 795, a battery 796, an indicator 797, and a motor 798.

The AP 710 may drive an operating system or applications, control a plurality of hardware or software components connected thereto, and also perform processing and operation for various data including multimedia data. The AP 710 may be formed of a system-on-chip (SoC), for example. According to an embodiment of the present disclosure, the AP 710 may further include a graphics processing unit (GPU) (not shown).

The communication module 720 (e.g., the communication interface 160) may perform a data communication with any other electronic device (e.g., the electronic device 104 or the server 106) connected to the electronic device 700 (e.g., the electronic device 101) through the network. According to an embodiment of the present disclosure, the communication module 720 may include a cellular module 721, a Wi-Fi module 723, a BT module 725, a GPS module 727, an NFC module 728, a radio frequency (RF) module 729.

The cellular module 721 may offer a voice call, a video call, a message service, an internet service, or the like through a communication network (e.g., LTE, LTE-A, CDMA, WCDMA, UMTS, WiBro, or GSM, etc.). Additionally, the cellular module 721 may perform identification and authentication of the electronic device in the communication network, using the SIM card 724. According to an embodiment of the present disclosure, the cellular module 721 may perform at least part of the functions the AP 710 can provide. For example, the cellular module 721 may perform at least part of a multimedia control function.

According to an embodiment of the present disclosure, the cellular module 721 may include a communication processor (CP). Additionally, the cellular module 721 may be formed of SoC, for example. Although some elements such as the cellular module 721 (e.g., the CP), the memory 730, or the power management module 795 are shown as separate elements being different from the AP 710 in FIG. 7, the AP 710 may be formed to have at least part (e.g., the cellular module 721) of the above elements.

According to an embodiment of the present disclosure, the AP 710 or the cellular module 721 (e.g., the CP) may load commands or data, received from a nonvolatile memory connected thereto or from at least one of the other elements, into a volatile memory to process them. Additionally, the AP 710 or the cellular module 721 may store data, received from or created at one or more of the other elements, in the nonvolatile memory.

Each of the Wi-Fi module 723, the BT module 725, the GPS module 727 and the NFC module 728 may include a processor for processing data transmitted or received therethrough. Although FIG. 7 shows the cellular module 721, the Wi-Fi module 723, the BT module 725, the GPS module 727 and the NFC module 728 as different blocks, at least part of these modules may be contained in a single IC chip or a single IC package. For example, at least part (e.g., the CP corresponding to the cellular module 721 and a Wi-Fi processor corresponding to the Wi-Fi module 723) of respective processors corresponding to the cellular module 721, the Wi-Fi module 723, the BT module 725, the GPS module 727 and the NFC module 728 may be formed as a single SoC.

The RF module 729 may transmit and receive data, e.g., RF signals or any other electric signals. Although not shown, the RF module 729 may include a transceiver, a power amp module (PAM), a frequency filter, a low noise amplifier (LNA), or the like. The RF module 729 may include any component, e.g., a wire or a conductor, for transmission of electromagnetic waves in a free air space. Although FIG. 7 shows that the cellular module 721, the Wi-Fi module 723, the BT module 725, the GPS module 727 and the NFC module 728 share the RF module 729, at least one of them may perform transmission and reception of RF signals through a separate RF module in an embodiment of the present disclosure.

The SIM card 724_1 to 724_N may be a specific card formed of SIM and may be inserted into a slot 725_1 to 725_N formed at a certain place of the electronic device. The SIM card 724_1 to 724_N may contain therein an IC card identifier (ICCID) or an international mobile subscriber identity (IMSI).

The memory 730 (e.g., the memory 130) may include an internal memory 732 and an external memory 734. The internal memory 732 may include, for example, at least one of a volatile memory (e.g., dynamic random access memory (DRAM), static RAM (SRAM), synchronous DRAM (SDRAM), etc.) or a nonvolatile memory (e.g., one time programmable read only memory (OTPROM), PROM, erasable and programmable ROM (EPROM), electrically erasable and programmable ROM (EEPROM), mask ROM, flash ROM, NAND flash memory, NOR flash memory, etc.).

According to an embodiment of the present disclosure, the internal memory 732 may have the form of a solid state drive (SSD). The external memory 734 may include a flash drive, e.g., compact flash (CF), secure digital (SD), micro-SD, mini-SD, extreme digital (xD), memory stick, or the like. The external memory 734 may be functionally connected to the electronic device 700 through various interfaces. According to an embodiment of the present disclosure, the electronic device 700 may further include a storage device or medium such as a hard drive.

The sensor module 740 may measure physical quantity or sense an operating status of the electronic device 700, and then convert measured or sensed information into electric signals. The sensor module 740 may include, for example, at least one of a gesture sensor 740A, a gyro sensor 740B, an atmospheric sensor 740C, a magnetic sensor 740D, an acceleration sensor 740E, a grip sensor 740F, a proximity sensor 740G, a color sensor 740H (e.g., RGB sensor), a biometric sensor 740I, a temperature-humidity sensor 740J, an illumination sensor 740K, and an ultraviolet (UV) sensor 740M. Additionally or alternatively, the sensor module 740 may include, e.g., an E-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris scan sensor (not shown), or a finger scan sensor (not shown). Also, the sensor module 740 may include a control circuit for controlling one or more sensors equipped therein.

The input unit 750 may include a touch panel 752, a digital pen sensor 754, a key 756, or an ultrasonic input unit 758. The touch panel 752 may recognize a touch input in a manner of capacitive type, resistive type, infrared type, or ultrasonic type. The touch panel 752 may further include a control circuit. In case of a capacitive type, a physical contact or proximity may be recognized. The touch panel 752 may further include a tactile layer. In this case, the touch panel 752 may offer a tactile feedback to a user.

The digital pen sensor 754 may be formed in the same or similar manner as receiving a touch input or by using a separate recognition sheet. The key 756 may include, for example, a physical button, an optical key, or a keypad. The ultrasonic input unit 758 is a specific device capable of identifying data by sensing sound waves with a microphone 788 in the electronic device 700 through an input tool that generates ultrasonic signals, thus allowing wireless recognition. According to an embodiment of the present disclosure, the electronic device 700 may receive a user input from any external device (e.g., a computer or a server) connected thereto through the communication module 720.

The display 760 (e.g., the display 150) may include a panel 762, a hologram 764, or a projector 766. The panel 762 may be, for example, liquid crystal display (LCD), active matrix organic light emitting diode (AM-OLED), or the like. The panel 762 may have a flexible, transparent or wearable form. The panel 762 may be formed of a single module with the touch panel 752. The hologram 764 may show a stereoscopic image in the air using interference of light. The projector 766 may project an image onto a screen, which may be located at the inside or outside of the electronic device 700. According to an embodiment of the present disclosure, the display 760 may further include a control circuit for controlling the panel 762, the hologram 764, and the projector 766.

The interface 770 may include, for example, an HDMI 772, a USB 774, an optical interface 776, or a D-subminiature (D-sub) 778. The interface 770 may be contained, for example, in the communication interface 160 shown in FIG. 1. Additionally or alternatively, the interface 770 may include, for example, a mobile high-definition link (MHL) interface, an SD card/ multi-media card (MMC) interface, or an infrared data association (IrDA) interface.

The audio module 780 may perform a conversion between sounds and electric signals. At least part of the audio module 780 may be contained, for example, in the input/output interface 140 shown in FIG. 1. The audio module 780 may process sound information inputted or outputted through a speaker 782, a receiver 784, an earphone 786, or a microphone 788.

The camera module 791 is a device capable of obtaining still images and moving images. According to an embodiment of the present disclosure, the camera module 791 may include at least one image sensor (e.g., a front sensor or a rear sensor), a lens (not shown), an image signal processor (ISP) (not shown), or a flash (e.g., LED or xenon lamp, not shown).

The power management module 795 may manage electric power of the electronic device 700. Although not shown, the power management module 795 may include, for example, a power management IC (PMIC), a charger IC, or a battery or fuel gauge.

The PMIC may be formed, for example, of an IC chip or SoC. Charging may be performed in a wired or wireless manner. The charger IC may charge a battery 796 and prevent overvoltage or overcurrent from a charger. According to an embodiment of the present disclosure, the charger IC may have a charger IC used for at least one of wired and wireless charging types. A wireless charging type may include, for example, a magnetic resonance type, a magnetic induction type, or an electromagnetic type. Any additional circuit for a wireless charging may be further used such as a coil loop, a resonance circuit, or a rectifier.

The battery gauge may measure the residual amount of the battery 796 and a voltage, current or temperature in a charging process. The battery 796 may store or create electric power therein and supply electric power to the electronic device 700. The battery 796 may be, for example, a rechargeable battery or a solar battery.

The indicator 797 may show thereon a current status (e.g., a booting status, a message status, or a recharging status) of the electronic device 700 or of its part (e.g., the AP 710). The motor 798 may convert an electric signal into a mechanical vibration. Although not shown, the electronic device 700 may include a specific processor (e.g., GPU) for supporting a mobile TV. This processor may process media data that comply with standards of digital multimedia broadcasting (DMB), digital video broadcasting (DVB), or media flow.

According to an embodiment of the present disclosure, method performed by an electronic device comprises transferring a first image of a first color bit format from a processor of the electronic device to a display unit of the electronic device or being functionally connected with the electronic device; detecting, by the processor, a screen transition; converting, by the processor based on the detection, a color bit format of second image corresponding to the screen transition into a second color bit format; and transferring the second image which is converted into the second color bit format from the processor to the display unit through an interface.

According to an embodiment of the present disclosure, wherein the display unit comprises at least one display processor, at least one display panel and at least part of the interface.

According to an embodiment of the present disclosure, by an electronic device, transferring the first image and the second image, from the processor of the electronic device to at least one display processor of the display unit through the interface. According to an embodiment of the present disclosure, method performed by an electronic device comprises receiving, by the display unit, the second image in the second color bit format from the processor; converting, by at least one display processor of the display unit, the received second image into a third color bit format; and displaying, via at least one display panel of the display unit, the second image in the third color bit format.

According to an embodiment of the present disclosure, wherein the third color bit format corresponds to a color depth of the display unit.

According to an embodiment of the present disclosure, wherein the third color bit format comprises the first color bit format.

According to an embodiment of the present disclosure, wherein the number of bits per a pixel of the first color bit format is greater than the number of bits per a pixel of the second color bit format.

According to an embodiment of the present disclosure wherein a color space of the first color bit format is one of red, green, blue (RGB), YUV, and Ycbcr.

According to an embodiment of the present disclosure, method performed by an electronic device comprises at least one of: copying at least one bit from the most significant bit of the received second image in the second color bit format as least significant bit of the second image in the third color bit format, and adding a fixed value to the least significant bit of the second image in the third color bit format.

According to an embodiment of the present disclosure, method performed by an electronic device comprises, receiving a user input; and determining whether a speed of the screen transition according to the user input is in a specified range or exceeds a specified threshold.

According to an embodiment of the present disclosure, wherein the user input comprises at least one of a touch input, a hovering input, a gesture input, a sight line input, and a brainwave input.

According to an embodiment of the present disclosure, method performed by an electronic device comprises converting the color bit format of the second image corresponding to the screen transition into the second color bit format if the speed of the screen transition according to the user input is in the specified range or exceeds the specified threshold.

Each of the above-discussed elements of the electronic device disclosed herein may be formed of one or more components, and its name may be varied according to the type of the electronic device. The electronic device disclosed herein may be formed of at least one of the above-discussed elements without some elements or with additional other elements. Some of the elements may be integrated into a single entity that still performs the same functions as those of such elements before integrated.

The term "module" used in this disclosure may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of application-specific IC (ASIC) chip, field-programmable gate arrays (FPGAs), and programmable-logic device, which have been known or are to be developed.

The apparatuses and methods of the disclosure can be implemented in hardware, and in part as firmware or as software or computer code in conjunction with hardware that is stored on a non-transitory machine readable medium such as a compact disc ROM (CD ROM), a RAM, a floppy disk, a hard disk, or a magnetooptical disk, or computer code downloaded over a network originally stored on a remote recording medium or a non-transitory machine readable medium and stored on a local non-transitory recording medium for execution by hardware such as a processor, so that the methods described herein are loaded into hardware such as a general purpose computer, or a special processor or in programmable or dedicated hardware, such as an ASIC or FPGA. As would be understood in the art, the computer, the processor, microprocessor, controller, control unit or other programmable hardware include memory components, e.g., RAM, ROM, flash, etc. that may store or receive software or computer code that when accessed and executed by the computer, processor or hardware implement the processing methods described herein.

The above-discussed method is described herein with reference to flowchart illustrations of user interfaces, methods, and computer program products according to embodiments of the present disclosure. It will be understood that each block of the flowchart illustrations, and combinations of blocks in the flowchart illustrations, can be implemented by computer program instructions.

These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that are executed on the computer or other programmable apparatus provide operations for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

According to various embodiments of the present disclosure, computer-readable memory can store instructions, which can be performed by at least one processor, the instructions including instructions of transferring image data of a first color bit format from a processor of the electronic device to a display processor; detecting, by the processor, a screen transition; changing, by the processor based on the detection, the image data associated with the screen transition into a second color bit format; and transferring the changed image data from the processor to the display processor through an interface.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method of processing display data of an electronic device, the method comprising:
transferring a first image of a first color bit format from a processor of the electronic device to a display unit of the electronic device or being functionally connected with the electronic device;
detecting, by the processor, a screen transition;
converting, by the processor based on the detection, a color bit format of second image corresponding to the screen transition into a second color bit format; and
transferring the second image which is converted into the second color bit format from the processor to the display unit through an interface.

2. The method of claim 1, wherein the display unit comprises at least one display processor, at least one display panel and at least part of the interface.

3. The method of claim 1, wherein the transferring the first image in the first color bit format and the second image in the second color bit format comprises transferring the first image and the second image, from the processor of the electronic device to at least one display processor of the display unit through the interface.

4. The method of claim 1, further comprising:
receiving, by the display unit, the second image in the second color bit format from the processor;
converting, by at least one display processor of the display unit, the received second image into a third color bit format; and
displaying, via at least one display panel of the display unit, the second image in the third color bit format.

5. The method of claim 4, wherein the third color bit format corresponds to a color depth of the display unit.

6. The method of claim 4, wherein the third color bit format comprises the first color bit format.

7. The method of claim 1, wherein the number of bits per a pixel of the first color bit format is greater than the number of bits per a pixel of the second color bit format.

8. The method of claim 1, wherein a color space of the first color bit format is one of red, green, blue (RGB), YUV, and Ycbcr.

9. The method of claim 4, wherein the converting the received second image into the third color bit format comprises at least one of :
copying at least one bit from the most significant bit of the received second image in the second color bit format as least significant bit of the second image in the third color bit format, and
adding a fixed value to the least significant bit of the second image in the third color bit format.

10. The method of claim 1, wherein the detecting comprises:
receiving a user input; and
determining whether a speed of the screen transition according to the user input is in a specified range or exceeds a specified threshold.

11. The method of claim 10, wherein the user input comprises at least one of a touch input, a hovering input, a gesture input, a sight line input, and a brainwave input.

12. The method of claim of claim 10, further comprising:
converting the color bit format of the second image corresponding to the screen transition into the second color bit format if the speed of the screen transition according to the user input is in the specified range or exceeds the specified threshold.

13. An electronic device comprising:
a display unit configured to display image; and
a processor configured to:
transfer a first image of a first color bit format to the display unit of the electronic device or being functionally connected with the electronic device,
detect a screen transition,
convert a color bit format of second image corresponding to the screen transition into a second color bit format, and
transfer the second image which is converted into the second color bit format from the processor to the display unit through an interface.

14. The electronic device of claim 13, wherein the display unit comprises at least one display processor, at least one display panel, and at least part of the interface

15. The electronic device of claim 13, wherein the processor is configured to transfer the first image in the first color bit format and the second image in the second color bit format to at least one display processor of the display unit through the interface

16. The electronic device of claim 13, wherein the display unit is further configured to receive the second image in the second color bit format from the processor, to convert the received second image into a third color bit format, and to display the second image in the third color bit format.

17. The electronic device of claim 16, wherein the third color bit format corresponds to a color depth of the display unit.

18. The electronic device of claim 16, wherein the third color bit format comprises the first color bit format.

19. The electronic device of claim 13, wherein the number of bits per a pixel of the first color bit format is greater than the number of bits per a pixel of the second color bit format.

20. The electronic device of claim 13, wherein a color space of the first color bit format is one of red, green, blue (RGB), YUV, and Ycbcr.

21. The electronic device of claim 16, wherein the display unit is further configured to copy at least one bit from the most significant bit of the received second image in the second color bit format as least significant bit of the second image in the third color bit format, and to add a fixed value to the least significant bit of the second image in the third color bit format.

22. The electronic device of claim 13, wherein the processor is configured to receive a user input, and to determine whether a speed of the screen transition according to the user input is in a specified range or exceeds a specified threshold.

23. The electronic device of claim 22, wherein the user input comprises at least one of a touch input, a hovering input, a gesture input, a sight line input, and a brainwave input.

24. The electronic device of claim 22, wherein the processor is configured to convert the color bit format of the second image corresponding to the screen transition into the second color bit format if the speed of the screen transition according to the user input is in the specified range or exceeds the specified threshold.
